Europäisches Patentamt

European Patent Office

Office européen des brevets

(19)

(11) Numéro de publication: **0 052 171**

**A1**

(12)

# DEMANDE DE BREVET EUROPEEN

(21) Numéro de dépôt: **80450006.4**

(22) Date de dépôt: **18.11.80**

(51) Int. Cl.³: **B 67 C 9/00**
**C 12 C 11/00**

(43) Date de publication de la demande:
**26.05.82 Bulletin 82/21**

(84) Etats contractants désignés:
**BE CH DE GB IT LI NL**

(71) Demandeur: **Foures, Jacques**
**Domaine de la Meulière**
**Cenac F33360 la Tresne(FR)**

(72) Inventeur: **Foures, Jacques**
**Domaine de la Meulière**
**Cenac F33360 la Tresne(FR)**

(74) Mandataire: **Trolliet, Jean-Claude**
**Cabinet BURDIPAT 20, cours du Chapeau Rouge**
**F-33000 Bordeaux(FR)**

(54) Installation pour la conservation et la distribution de vin contenu dans une bouteille.

(57) L'invention concerne un procédé de conservation et de distribution de vin contenu dans une bouteille et une installation conforme au procédé.

Le procédé de conservation et de distribution de vin contenu dans une bouteille et l'installation permettant la mise-en-œuvre du procédé consiste à amener à une pression régulière au travers d'une canalisation 4 un gaz inactif chimiquement à l'intérieur de la bouteille 2 placée verticalement dans une enceinte 3 close calorifugée et hermétique entre le bouchon 8 et le liquide 9, l'écoulement du vin 9 au travers d'une canalisation 10, une extrémité de ladite canalisation plongeant dans le liquide 9, étant assuré par la pression du gaz à l'intérieur de la bouteille 2.

EP 0 052 171 A1

TITRE ............
voir page de garde

1

Procédé de conservation et distribution de vin contenu dans

une bouteille et Installation conforme au procédé

La présente invention concerne un procéde de conservation et de distribution de vin contenu dans une bouteille et une installation conforme au procédé.

On connaît pour éviter l'oxydation au contact de l'air des vins contenus dans des cuves closes de stockage partiellement remplies, l'utilisation de gaz inactif chimiquement tel que azote, ce gaz est introduit en partie supérieure des cuves en quantité suffisante pour compenser en volume le vide des cuves de sorte à chasser l'air contenu dans ledit vide, ce mode de conservation est parfait mais n'a pas pour fonction la distribution du vin, celui-ci étant soutiré au moyen de vannes placées en partie basse des cuves par sa simple pesanteur, l'azote étant introduit en partie haute des cuves dans le vide au fur et à mesure de l'écoulement dudit vin.

Le procédé de conservation et de distribution de vins blancs, rouges, rosés, etc.., contenus dans une bouteille et l'installation permettant la mise en œuvre du procédé consiste au moyen de gaz inactif chimiquement suivant la catégorie et nature des vins, tel que : azote, gaz carbonique ou mélange de ces deux gaz, contenu sous pression dans un ou plusieurs réservoirs de stockage à amener au travers d'une canalisation à une pression régulée par un mano-détendeur le ou lesdits gaz à l'intérieur de la bouteille maintenue verticalement dans une enceinte close, hermétique et calorifugée

2

entre le bouchon et le liquide contenu dans ladite bouteille afin de compenser le vide et éviter la pénétration d'air, ladite canalisation d'amenée de gaz passe au travers du bouchon et est interrompue au ras de celui-ci à l'intérieur de la bouteille, la pression du gaz à l'intérieur de la bouteille est définie par une soupape à réglage manuel, elle est variable selon la catégorie des vins à conserver, toutefois une pression nécessaire est exercée pour permettre l'écoulement du vin au travers d'une seconde canalisation traversant le bouchon une extrémité plongeant dans le liquide contenu dans la bouteille, interrompue avant le fond de celle-ci, l'autre extrémité étant pourvue d'un robinet d'arrêt.

D'autres caractéristiques et avantages de l'invention ressortiront plus clairement de la description qui va suivre faite en regard du schéma joint donné à titre d'exemple non limitatif conforme au procédé.

Comme représenté, l'installation comporte un ou plusieurs réservoirs 1 de stockage de gaz comprimé tel que azote, gaz carbonique ou mélange des deux gaz, inactif chimiquement selon la nature du vin 9 à conserver ou à extraire contenu dans une bouteille 2 disposée verticalement dans une enceinte 3 close, hermétique et calorifugée, dotée d'un évaporateur, d'une résistance et d'un sondeur précis non représenté de sorte que le vin 9 contenu dans la bouteille suivant sa nature soit maintenu à une température constante correspondant à la température à laquelle le vin doit être servi et/ou dégusté. Le gaz comprimé dans le ou les réservoirs 1 est dirigé vers l'enceinte 3 au moyen d'une canalisation 4 dotée d'un ou plusieurs mano-détendeurs 5 afin de réguler la pression du ou des gaz à l'intérieur de ladite canalisation 4, une ou plusieurs valves 6 sont prévues pour éviter les à-coups de pression. L'extrémité 7 opposée au(x) réservoir(s) 1 de la canalisation 4 à l'intérieur de l'enceinte 3 traverse le bouchon 8 de fermeture de la bouteille 2 contenant le vin, ladite extrémité 7 de canalisation 4 est interrompue au ras dudit bouchon 8 à l'intérieur de la bouteille 2 de sorte que le ou les gaz soient diffusés dans la bouteille 2 entre le vin 9 contenu dans la bouteille et le bouchon 8 afin qu'aucune

3

pénétration d'air dans cet espace ne soit possible, néfaste à la conservation du vin. De manière à extraire le vin 9 contenu dans la bouteille 2, une seconde canalisation 10 est prévue, elle pénètre dans la bouteille 2 au travers du bouchon 8 et plonge dans le vin 9, elle est interrompue avant le fond 11 de ladite bouteille 2 et ce de sorte à éloigner ladite extrémité des dépôts de vin possibles au fond de la bouteille, l'extraction du vin 9 au travers de la canalisation 10 est obtenue par pression du ou des gaz introduits dans le vide de la bouteille 2, l'écoulement peut être interrompu par un robinet 12 placé en bout de ladite canalisation 10.

Suivant la nature des vins et lorsque l'écoulement est interrompu afin que ces derniers ne se détériorent pas par des échanges possibles entre gaz et vin et afin de maintenir le bouquet de vieillissement, la pression du gaz dans la bouteille est soit celle permettant l'écoulement du vin ou est diminuée ou réduite à néant au moyen d'une soupape à réglage manuel variable 13, l'arrivée du gaz pouvant être interrompue grâce à un robinet 14 disposé sur la canalisation 4 avant la soupape.

4

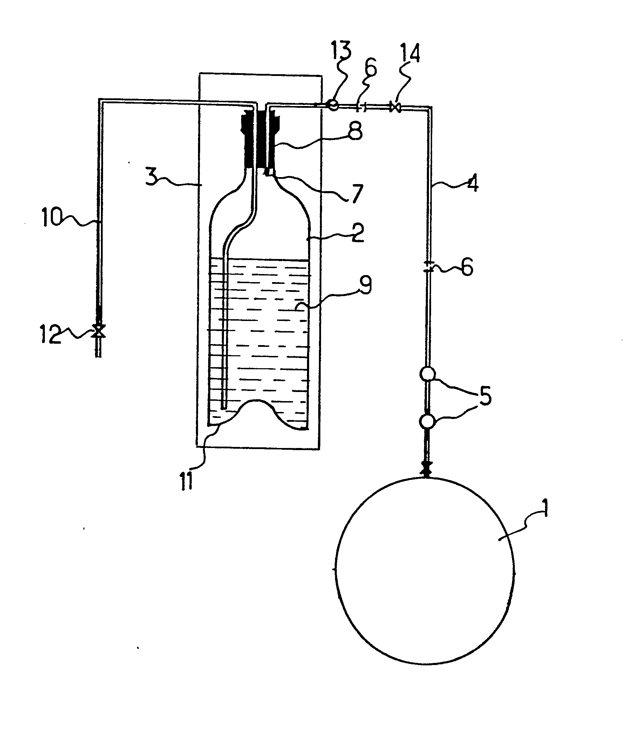

Revendications

1°) Installation pour la conservation et distribution de vin contenu dans une bouteille consistant à diriger un gaz à basse pression inactif chimiquement tel qu'azote, gaz carbonique ou mélange de ces deux gaz à l'intérieur de la bouteille entre le vin et le bouchon de fermeture afin de compenser le vide existant, la basse pression du gaz introduit dans la bouteille étant néanmoins suffisante pour permettre l'écoulement du vin au travers d'une seconde canalisation, caractérisée en ce que le gaz inactif chimiquement contenu sous pression dans un ou plusieurs réservoirs, est dirigé au travers d'une canalisation dotée d'organes de détention et de régulation dans la bouteille maintenue verticalement et disposée dans une enceinte close hermétique et calorifugée, ladite canalisation pénétrant dans la bouteille au travers d'un bouchon est interrompue au ras du bouchon à l'intérieur de la bouteille entre le vin et le bouchon tandis qu'au travers dudit bouchon passe une seconde canalisation d'écoulement plongeant dans le vin interrompue en une extrémité avant le fond de la bouteille tandis qu'en son autre extrémité elle est pourvue d'un robinet permettant l'écoulement ou l'arrêt de l'écoulement du vin.

2°) Installation selon la revendication 1 caractériée en ce que la canalisation d'amenée de gaz est dotée d'un ou plusieurs mano-détendeurs à proximité du ou des réservoirs.

3°) Installation selon la revendication 1 caractérisée en ce que la canalisation est dotée d'au moins une valve afin d'éviter les à-coups de pression.

4°) Installation selon la revendication 1 caractérisée en ce que l'enceinte close hermétique et calorifugée est pourvue d'un évaporateur, d'une résistance et d'une sonde précise de manière à conserver le vin contenu dans la bouteille suivant sa nature à une température constante correspondant à celle de sa dégustation.        ;

5°) Installation selon la revendication 1 caractérisée en ce que la canalisation d'écoulement est interrompue avant le fond de la bouteille afin d'éloigner l'extrémité de ladite canalisation des dépôts de vin possibles au fond de la bouteille.

Office européen
des brevets

**RAPPORT DE RECHERCHE EUROPEENNE**

Numéro de la demande

EP 80 45 0006

| Catégorie | DOCUMENTS CONSIDERES COMME PERTINENTS | | CLASSEMENT DE LA DEMANDE (Int. Cl.³) |
|---|---|---|---|
| | Citation du document avec indication, en cas de besoin, des parties pertinentes | Revendica-tion concernée | |
| X | <u>DE - C - 229 300</u> (T. STRIEDER)<br>* Figure; page 2, lignes 1-41 *<br><br>-- | 1 | B 67 C  9/00<br>C 12 C 11/00 |
| X | <u>US - A - 4 011 971</u> (E.R. HAYDON)<br>* Figures 1,2; revendication 1;<br>colonne 1, lignes 7-24, lignes<br>41-46; colonne 1, ligne 49 -<br>colonne 2, ligne 17; colonne 2,<br>ligne 64; colonne 5, lignes<br>40-52; colonne 6, lignes 1-54 *<br><br>-- | 1-3,5 | |
| X | <u>FR - A - 352 848</u> (F. RICHARD)<br>* Figures 1,2,11;; page 1,lignes<br>1-6, 27-33; page 1, ligne 47 -<br>page 2, ligne 75 *<br><br>-- | 1 | DOMAINES TECHNIQUES RECHERCHES (Int. Cl.³)<br><br>C 12 L 11/00<br>B 67 C  9/00<br>C 12 H  1/20 |
| X | <u>FR - A - 354 225</u> (T. STERNE)<br>* Figures 1,2; page 1, lignes<br>14-40; page 1, ligne 45 - page<br>2, ligne 42 *<br><br>-- | 1,5 | |
| | <u>FR - A - 1 478 997</u> (R. LANDIS et al.)<br>* Figures 1,2,3; résumé a,d,f *<br><br>---- | 1 | CATEGORIE DES DOCUMENTS CITES<br><br>X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons |
| | Le présent rapport de recherche a ete établi pour toutes les revendications | | &: membre de la même famille, document correspondant |

| Lieu de la recherche | Date d'achèvement de la recherche | Examinateur |
|---|---|---|
| La Haye | 21-07-1981 | COUCKE |

OEB Form 1503.1  06.78